Europäisches Patentamt

European Patent Office

Office européen des brevets

(11) Publication number: **0 218 834**
**B1**

(12) **EUROPEAN PATENT SPECIFICATION**

(45) Date of publication of patent specification: **07.11.90**

(51) Int. Cl.⁵: **F 02 B 3/12, F 02 M 61/04**

(21) Application number: **86110988.2**

(22) Date of filing: **08.08.86**

(54) **Direct injection type diesel engine.**

(30) Priority: **13.08.85 JP 176933/85**

(43) Date of publication of application:
**22.04.87 Bulletin 87/17**

(45) Publication of the grant of the patent:
**07.11.90 Bulletin 90/45**

(84) Designated Contracting States:
**DE FR GB IT SE**

(56) References cited:
**EP-A-0 142 708**
**DE-A-2 513 588**
**DE-A-2 826 602**
**DE-A-2 837 606**
**GB-A-2 084 249**
**US-A-3 559 892**

(73) Proprietor: **Isuzu Motors Limited**
**6-22-10 Minamiooi Shinagawa-ku**
**Tokyo 140 (JP)**

(72) Inventor: **Ishida, Shiro c/o Fujisawa Factory**
**Isuzu Motors Limited 8, Tsuchidana**
**Fujisawa-shi Kanagawa (JP)**

(74) Representative: **Kraus, Walter, Dr. et al**
**Patentanwälte Kraus, Weisert & Partner**
**Thomas-Wimmer-Ring 15**
**D-8000 München 22 (DE)**

Courier Press, Leamington Spa, England.

## Description

The present invention relates to a direct injection type Diesel engine comprising a combustion chamber having an inner wall surface formed at a piston head of a piston reciprocated in a cylinder of said Diesel engine, a passage being formed at a cylinder head of said Diesel engine, and a fuel injection nozzle means being provided in said passage, said fuel injection nozzle means mounted on said cylinder head of said Diesel engine at a position offset from the center of said combustion chamber, said fuel injection nozzle means having several nozzle holes, a first one of which being exposed to said combustion chamber and a second nozzle hole being exposed to said inner wall surface of said combustion chamber when the piston is at its top dead center, wherein said fuel injection nozzle means injects fuel only through said second nozzle hole exposed to said inner wall surface while keeping said first nozzle hole closed when said Diesel engine is under low load, said nozzle means having only two nozzle holes, a main spray fuel of large spray penetration being injected through said first nozzle hole, an auxiliary spray fuel of small spray penetration being injected through said second nozzle hole.

The direct injection type Diesel engine has a merit such as high combustion efficiency and low exhaust temperature, but on the other hand, it has a demerit such as high explosion pressure and large vibration and noise.

There is known a direct injection type Diesel engine employing a M-type (Mann-type) combustion chamber. The M-type combustion chamber is constructed in the following manner. Fuel injected from a fuel injection nozzle is deposited onto an inner wall surface of the combustion chamber to form a fuel film on the inner wall surface. The fuel film is heated by heat of the atmosphere in the combustion chamber and the inner wall to create a fuel vapor. The fuel vapor is mixed with a suction air to form an air-fuel mixture for combustion and cause self-ignition. In the direct injection type Diesel engine employing the M-type combustion chamber, the fuel vapor sequentially vaporized from the inner wall of the combustion chamber is provided for combustion to slow the combustion and suppress rapid increase in pressure. Therefore, noise and vibration are relatively reduced. However, ignition lag is easily generated, and rather causes explosive combustion. Further, performance in HC and blue-white smoke is deteriorated. This problem remarkably occurs under low load at low temperature in particular.

Further, there is known another direct injection type Diesel engine employing a Pintaux nozzle for preliminary injection. In this case, a preliminary injecting fuel (auxiliary spray fuel) is injected to the center of the combustion chamber in such a manner as to be drawn by swirl S, thereby accelerating creation of an air-fuel mixture and improving ignitability and performance in HC and blue-white smoke. However, as the creation of the air-fuel mixture is instantaneously attained, combustion is processed at a dash. As a result, the rate of increase in pressure becomes high to cause large noise and vibration.

A direct injection type Diesel engine of the type mentioned in the beginning is disclosed in DE-A-2 837 606. The fuel injection nozzle means of this known direct injection type Diesel engine has a combustion chamber with a rectangular vertical cross-section which does not induce a vertical swirl of the incoming air and therefore does not improve the mixture of fuel and air for better combustion.

Furthermore, DE-A-28 26 602 discloses a combustion chamber which is formed such that the vertical section thereof is shaped approximately circular with the top portion being linear and the remaining portion being curved, and the horizontal section thereof being circular with its diameter being enlarged to a predetermined depth from the piston top surface and therefrom being reduced to zero in the downward direction of the center axis of the combustion chamber so as to form an inwardly protruding lip portion at the uppermost portion of the combustion chamber, so that a vertical swirl may be generated in the combustion chamber upon compression movement of the piston. DE-A-28 26 602 further discloses the use of such combustion chamber in a direct injection type Diesel engine comprising fuel injection nozzle means having a first and a second nozzle hole.

Finally, EP-A-0 142 708 discloses a fuel injection nozzle means in a passage being formed at a cylinder head of a Diesel engine and communicated with a combustion chamber, said passage having an inner wall surface connected to an inner wall surface of said combustion chamber. However, in this Diesel engine the aforesaid combustion chamber is an auxiliary or precombustion chamber, and furthermore, this auxiliary combustion chamber is provided in the cylinder head, and the aforesaid passage is arranged in the cylinder head between the fuel injection nozzle means and the auxiliary or precombustion chamber. Furthermore, this precombustion chamber does not have a unique vertical cross-section, and the first nozzle hole directed to the inner wall surface of the passage provides fuel for a glow plug located near this part of the inner wall surface.

The present invention has been accomplished in view of the above-mentioned problem. It is an object of the present invention to provide a direct injection type Diesel engine which may reduce the noise and improve HC (hydrocarbon) and blue-white smoke.

According to the present invention, the direct injection type Diesel engine of the type mentioned in the beginning is characterized in that said passage having a free inner wall surface connected to said inner wall surface of said combustion chamber when the piston is at its top dead center and said second nozzle hole being exposed to said free inner wall surface of said passage at a position adjacent thereto, said combustion chamber being formed in a manner such that the vertical section thereof is shaped approximately circular with the uppermost portion being linear and the remaining portion being curved, and the horizontal section thereof is circular with its diameter being enlarged to a predetermined depth from the piston top surface and therefrom being reduced to zero in the downward direction of the center axis of the combustion chamber so as to form an inwardly protruding lip portion at the top portion of the combustion chamber, so that a vertical swirl may be generated in the combustion chamber upon compression movement of the piston.

In this Diesel engine a part of the fuel injected from the auxiliary nozzle hole is let collide with the inner wall surface of the passage and is atomized, while a residual part of the fuel is let flow from the inner wall surface of the passage along the inner wall surface of the combustion chamber, thereby achieving premature ignition and slow combustion.

Further developments of the invention are defined in the dependent claims.

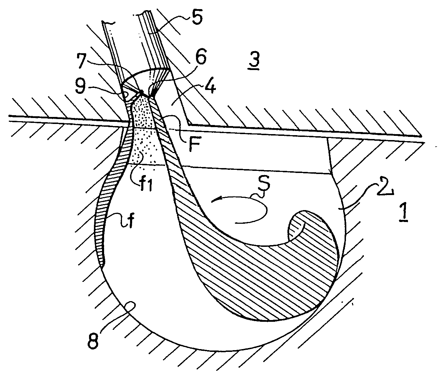

The single Figure of the drawing is a sectional side view of a preferred embodiment of the present invention.

Now, there will be described in detail a preferred embodiment of the present invention with reference to the accompanying drawing.

As shown in the single Figure of the drawing a piston head 1 of a piston adapted to be reciprocated in a cylinder of a Diesel engine is formed with a ball-like combustion chamber 2 having an inner wall surface 8. In the other hand, a cylinder head 3 of the Diesel engine is formed with a fuel injection nozzle means mounting passage 4 communicated with the cylinder at a position deviated from the center of the combustion chamber 2. A fuel injection nozzle means 5 is provided in the passage 4 in such a manner as to be exposed to the combustion chamber 2 at the position deviated from the center of the combustion chamber 2.

The fuel injection nozzle means 5 is of a type similar to a Pintaux nozzle. The fuel injection nozzle means 5 is formed with a main nozzle hole 6 for main injection at a center thereof, and is also formed with an auxiliary nozzle hole 7 for auxiliary injection at a side conical portion of the nozzle means. The auxiliary nozzle hole 7 is adapted to be opened and inject an auxiliary spray fuel when a lift amount of a needle valve (not shown) is less than a predetermined value under low load, for example, and the main nozzle hole 6 is closed. On the other hand, the main nozzle hole 6 is adapted to be opened and inject a main spray fuel predominantly over the auxiliary nozzle hole 7 when the lift amount of the needle valve is more than the predetermined value under high load, for example. In particular, an aperture of the auxiliary nozzle hole 7 is designed to be small, so as to atomize the auxiliary spray fuel.

According to the preferred embodiment the fuel injection nozzle means mounting passage 4 is formed with an inner wall surface 9 connected to the inner wall surface 8 of the combustion chamber, and the auxiliary nozzle hole 7 is exposed to the inner wall surface 9. On the other hand, the main nozzle hole 6 may be exposed to the inner wall surface 8 of the combustion chamber 2 on a downstream side of swirl S created in the combustion chamber 2 at a relatively long distance from the wall surface 8.

In operation, the amount of fuel to be injected is little under low load such as idling. Therefore, the lift amount of the needle valve may be made little, and accordingly an auxiliary spray fuel f is injected from the auxiliary nozzle hole 7 only. The auxiliary spray fuel f is let once collide with the inner wall surface 9, and is then allowed to flow from the passage 4 to the inner wall surface 8 of the combustion chamber. In this case, the auxiliary spray fuel f is prevented from being drawn by the swirl S until it collides with the inner wall surface 8 of the combustion chamber, thereby suppressing the rapid combustion.

A part $f_1$ of the fuel is atomized by the power of such collision. Then, the atomized fuel is inwardly scattered in the combustion chamber 2, and is converted into an air-fuel mixture by the swirl S created in the combustion chamber 2 to contribute to ignition.

Most of residual fuel f is deposited onto the inner wall surface 8 of the combustion engine after collision, and is allowed to flow in the state of film along the swirl S. In other words, premature ignition may be attained with the atomized fuel $f_1$ scattered by the collision against the inner wall surface 9 and mixed with air by the swirl S. Further, combustion after ignition may be slowed by the film-like fuel f flowing along the inner wall surface 8 of the combustion chamber. Thus, ignition lag may be prevented, and the rate of pressure increase in the cylinder may be suppressed to achieve reduction in the noise.

When the fuel is formed into a film, and the film-like fuel is allowed to flow in the same direction of a stream of the swirl S, the mixing of fuel with air by the swirl S is suppressed. If vaporization of fuel and mixing of fuel with air are remarkably spoiled, performance in HC and blue-white smoke is deteriorated. In this regard, according to the present invention, the auxiliary spray fuel f is atomized by making the aperture small, and the fuel film is made thin. As a result, vaporization of the fuel by heat in the atmosphere in the combustion chamber and from the inner wall of the combustion chamber may be accelerated. Under the accelerated condition, the partial fuel $f_1$ is atomized and scattered to secure the premature ignition. After the premature ignition, a fuel vapor is sufficiently supplied for combustion to attain smooth slow combustion and further improve HC and blue-white smoke.

Consequently, according to the present invention, a slow combustion process is conducted under the accelerated condition of vaporization and mixing of the film-like fuel with air. Under such a good balance of accelerated vaporization of fuel and slow combustion, rapid increase in pressure is suppressed to reduce the noise and improve HC and blue-white smoke. Especially, the premature ignition by atomization of the partial fuel $f_1$ prevents ignition lag and explosive combustion, and further suppresses creation of HC and blue-white smoke.

On the other hand, under medium and high load, a combustion process similar to that under low load is conducted at the beginning of injection. Especially in this case, the needle valve is largely lifted, and then a main spray fuel F having a large spray penetration is injected from the main nozzle hole 6. Similarly, the main spray fuel F is injected in the same direction of the stream of the swirl S toward the inner wall surface 8 of the combustion chamber 2 on the downstream side of the swirl S, and is deposited in the state of film onto the inner wall surface 8 of the combustion chamber 2 by the energy of the swirl S. Then, the fuel F is vaporized by a flame or the like created by the premature ignition of the auxiliary spray fuel f. Accordingly, it is possible to reduce the noise rather than instantaneously mix the overall fuel with air.

Furthermore, according to the present invention, shortening of ignition lag (securing of premature ignition) makes it possible to use fuel of a low cetane number and suitably operate the Diesel engine.

As is mentioned above, the superior effects of the present invention are summarized as follows:

(1) Fuel may be satisfactorily burnt by the premature ignition and the slow combustion process to thereby reduce the noise and improve HC and blue-white smoke.

(2) The auxiliary spray fuel may be prevented from being drawn by the swirl until it collides with the inner wall surface to thereby suppress the rapid combustion.

(3) The use of fuel of a low cetane number may be possible to thereby suitably operate the Diesel engine by securing the premature ignition.

**Claims**

1. A direct injection type Diesel engine comprising a combustion chamber (2) having an inner wall surface (8) formed at a piston head (1) of a piston reciprocated in a cylinder of said Diesel engine, a passage (4) being formed at a cylinder head (3) of said Diesel engine, and a fuel injection nozzle means (5) being provided in said passage (4), said fuel injection nozzle means mounted on said cylinder head (3) of said Diesel engine at a position offset from the center of said combustion chamber (2), said fuel injection nozzle means (5) having several nozzle holes (6, 7), a first one (6) of which being exposed to said combustion chamber (2) and a second nozzle hole (7) being exposed to said inner wall surface (8) of said combustion chamber (2) when the piston is at its top dead center wherein said fuel injection nozzle means (5) injects fuel (f) only through said second nozzle hole (5) exposed to said inner wall surface (8) while keeping said first nozzle hole (6) closed when said Diesel engine is under low load said nozzle means (5) having only two nozzle holes (6, 7), a main spray fuel (F) of large spray penetration being injected through said first nozzle hole (6), an auxiliary spray fuel (f) of small spray penetration being injected through said second nozzle hole (7), characterized in that said passage (4) having a free inner wall surface (9) connected to said inner wall surface (8) of said combustion chamber (2) when the piston is at its top dead center and said second nozzle hole (7) being exposed to said free inner wall surface (9) of said passage (4) at a position adjacent thereto, said combustion chamber (2) being formed in a manner such that the vertical section thereof is shaped approximately circular with the uppermost portion being linear and the remaining portion being curved, and the horizontal section thereof is circular with its diameter being enlarged to a predetermined depth from the piston top surface and therefrom being reduced to zero on the downward direction of the center axis of the combustion chamber (2) so as to form an inwardly protruding lip portion at the top portion of the combustion chamber (2), so that a vertical swirl may be generated in the combustion chamber (2) upon compression movement of the piston.

2. A direct injection type Diesel engine according to claim 1, characterized in that said second nozzle hole (7) is directed downward and said fuel injection nozzle means (5) injects an auxiliary spray fuel (f) from said second nozzle hole (7) toward said inner wall surface (8) of said combustion chamber (2), so as to let said fuel (f) flow downward as well as in the direction on a stream of swirl (S) generated in said combustion chamber (2) along said inner wall surface (8) of said combustion chamber (2).

3. A direct injection type Diesel engine according to claim 1, characterized in that said inner wall surface (9) of said passage (4) is in such a manner that an auxiliary spray fuel (f) injected from said auxiliary nozzle hole (7) is allowed to collide with said inner wall surface (9) of said passage (4), and a part $(f_1)$ of said auxiliary spray fuel (f) is atomized to be scattered, while a residual part of said auxiliary spray fuel (f) is let flow along said inner wall surface (8) of said combustion chamber (2).

4. A direct injection type Diesel engine according to claim 1, characterized in that said main nozzle hole (6) of said fuel injection nozzle means (5) is exposed to said inner wall surface (8) of said combustion chamber (2) on a downstream side of swirl (S) generated in said combustion chamber (2), and injects a main spray fuel (F) toward said inner wall surface (8) of said combustion chamber (2), so as to let said fuel (F) flow on said inner wall surface (8) of said combustion chamber (2) along a stream of said swirl (S).

**Patentansprüche**

1. Dieselmotor vom Direkteinspritztyp, umfassend eine Verbrennungskammer (2), die eine innere Wandoberfläche (8) hat, welche in einem Kolbenkopf (1) eines Kolbens ausgebildet ist, der in einem Zylinder des Dieselmotors hin- und her bewegt wird, einen Kanal (4), der in einem Zylinderkopf (3) des Dieselmotors ausgebildet ist, und eine Kraftstoffeinspritzdüseneinrichtung (5), die in dem Kanal (4) vorgesehen ist, wobei die Kraftstoffeinspritzdüseneinrichtung auf dem Zylinderkopf (3) des Dieselmotors in einer Position angebracht ist, die gegenüber der Mitte der Verbrennungskammer (2) versetzt ist, wobei die Kraftstoffeinspritzdüseneinrichtung (5) mehrere Düsenöffnungen (6, 7) hat, von denen eine erste (6) zu der Verbrennungskammer (2) freiliegt und eine zweite Düsenöffnung (7) zu der inneren Wandoberfläche (8) der Verbrennungskammer (2) freiliegt, wenn der Kolben in seinem oberen Totpunkt ist, worin die Kraftstoffeinspritzdüseneinrichtung (5) Kraftstoff (f) nur durch die zweite Düsenöffnung (5), die zu der inneren Wandoberfläche (8) freiliegt, einspritzt, während sie die erste Düsenöffnung (6) geschlossen hält, wenn der Dieselmotor unter niedriger Last ist, wobei die Düseneinrichtung (5) nur zwei Düsenöffnungen (6, 7) hat, wobei eine Hauptkraftstoffsprühung (F) von großer Sprühungseindringung durch die erste Düsenöffnung (6) eingespritzt wird, wobei eine Hilfskraftstoffsprühung (f) von kleiner Sprühungseindringung durch die zweite Düsenöffnung (7) eingespritzt wird, dadurch gekennzeichnet, daß der Kanal (4) eine freie innere Wandoberfläche (9) hat, die mit der inneren Wandoberfläche (8) der Verbrennungskammer (2) verbunden ist, wenn der Kolben in seinem oberen Totpunkt ist, und die zweite Düsenöffnung (7) zu der freien inneren Wandoberfläche (9) des Kanals (4) in einer dazu benachbarten Position freiliegt, wobei die Verbrennungskammer (2) in einer solchen Weise ausgebildet ist, daß der Vertikalschnitt derselben angenähert kreisförmig geformt ist, wobei der oberste Teil linear und der übrige Teil gekrümmt ist, und der Horizontalschnitt derselben kreisförmig ist, wobei sich sein Durchmesser von der oberen Kolbenoberfläche bis zu einer vorbestimmten Tiefe vergrößert und davon in der abwärtigen Richtung der Mittelachse der Verbrennungskammer (2) auf Null vermindert wird, so daß ein einwärts vorstehender Lippenteil an dem oberen Teil der Verbrennungskammer (2) ausgebildet wird, so daß ein vertikaler Wirbel in der Verbrennungskammer (2) bei der Kompressionsbewegung des Kolbens erzeugt werden kann.

2. Dieselmotor vom Direkteinspritztyp nach Anspruch 1, dadurch gekennzeichnet, daß die zweite Düsenöffnung (7) nach abwärts gerichtet ist und die Kraftstoffeinspritzdüseneinrichtung (5) eine Hilfskraftstoffsprühung (f) aus der zweiten Düsenöffnung (7) nach der inneren Wandoberfläche (8) der Verbrennungskammer (2) zu einspritzt, so daß dieser Kraftstoff (f) nach abwärts wie auch in der Richtung auf einen Strom eines Wirbels (S), der in der Verbrennungskammer (2) erzeugt worden ist, entlang der inneren Wandoberfläche (8) der Verbrennungskammer (2) strömen gelassen wird.

3. Dieselmotor vom Direkteinspritztyp nach Anspruch 1, dadurch gekennzeichnet, daß die innere Wandoberfläche (9) des Kanals (4) in einer solchen Weise ist, daß es einer Hilfskraftstoffsprühung (f), die aus der Hilfsdüsenöffnung (7) eingespritzt wird, ermöglicht wird, mit der inneren Wandoberfläche (9) des Kanals (4) zu kollidieren, und ein Teil (f₁) der Hilfskraftstoffsprühung (f) zerstäubt wird, um gestreut zu werden, während ein restlicher Teil der Hilfskraftstoffsprühung (f) entlang der inneren Wandoberfläche der Verbrennungskammer (2) strömen gelassen wird.

4. Dieselmotor vom Direkteinspritztyp nach Anspruch 1, dadurch gekennzeichnet, daß die Hauptdüsenöffnung (6) der Kraftstoffeinspritzdüseneinrichtung (5) zu der inneren Wandoberfläche (8) der Verbrennungskammer (2) auf einer stromabwärtigen Seite von Wirbel (S), der in der Verbrennungskammer (2) erzeugt wird, freiliegt, und eine Hauptkraftstoffsprühung (F) nach der inneren Wandoberfläche (8) der Verbrennungskammer (2) zu einspritzt, so daß dieser Kraftstoff (F) auf der inneren Wandoberfläche (8) der Verbrennungskammer (2) entlang einem Strom des Wirbel (S) strömen gelassen wird.

**Revendications**

1. Moteur diesel du type à injection directe, comprenant une chambre de combustion (2) possédant une surface de paroi intérieure (8) formée au niveau d'une tête (1) d'un piston déplacé en va-et-vient dans un cylindre dudit moteur diesel, un passage (4) étant formé dans la tête (3) du cylindre dudit moteur diesel et des moyens (5) formant injecteur de carburant étant prévus dans ledit passage (4), lesdits moyens formant injecteur de carburant étant montés sur ladite tête (3) du cylindre dudit moteur diesel dans une position décalée par rapport au centre de ladite chambre de combustion (2), lesdits moyens formant injecteur de carburant (5) possédant plusieurs trous (6, 7), dont un premier (6) est exposé à ladite chambre de combustion (2) tandis qu'un second trou (7) est exposé à ladite surface de paroi intérieure (8) de ladite chambre de combustion (2) lorsque le piston est dans sa position de point mort haut, dans laquelle lesdits moyens formant injecteur de carburant (5) injectent le carburant (f) uniquement par ledit second trou (5) exposé à ladite surface de paroi intérieure (8), tout en maintenant fermé ledit premier trou (6) lorsque ledit moteur diesel fonctionne sous faible charge, lesdits moyens formant injecteur (5) comportant seulement deux trous (6, 7), un jet principal de carburant (F) pénétrant profondément étant injecté par ledit premier trou (6), et un jet auxiliaire de carburant (f) s'étendant sur une faible profondeur étant injecté par ledit second trou (7), caractérisé en ce que ledit passage (4) possédant une surface de paroi intérieure libre (9) raccordée à ladite surface de paroi intérieure (8) de ladite chambre de combustion (2) lorsque le piston est dans sa position de point mort haut et ledit second trou (7) de l'injecteur étant exposé à ladite surface de paroi intérieure libre (9) dudit passage (4) dans une position adjacente à ce passage, ladite chambre de combustion (2) étant formée de telle sorte que sa section verticale possède une forme approximativement circulaire, sa partie supérieure étant rectiligne tandis que la partie restante est courbe, et que sa section horizontale et circulaire possède un diamètre qui s'élargit jusqu'à une profondeur prédéterminée à partir de la surface supérieure du piston et diminue, à partir de là, jusqu'à la valeur zéro dans la direction descendante sur l'axe central de la chambre de combustion (2), de manière à former une partie en forme de lèvre saillante intérieurement au niveau de la partie supérieure de la chambre de combustion (2) de sorte qu'un tourbillon vertical peut être produit dans la chambre de combustion (2) lors du mouvement de compression du piston.

2. Moteur diesel du type à injection directe selon la revendication 1, caractérisé en ce que ledit second trou (7) de l'injecteur est dirigé vers le bas et lesdits moyens formant injecteur de carburant (5) injectent un jet auxiliaire de carburant (f) à partir dudit second trou (7) en direction de ladite surface de paroi intérieure (8) de ladite chambre de combustion (2) de manière à faire circuler ledit carburant (f) selon un déplacement descendant ainsi que dans la direction d'un écoulement en forme de tourbillon (S) produit dans ladite chambre de combustion (2) le long de ladite surface de paroi intérieure (8) de ladite chambre de combustion (2).

3. Moteur diesel du type à injection directe selon la revendication 1, caractérisé en ce que ladite surface de paroi intérieure (9) dudit passage (4) est agencée de telle sorte qu'un jet auxiliaire de carburant (f) injecté à partir dudit trou auxiliaire (7) est à même de venir frapper ladite surface de paroi intérieure (9) dudit passage (4), et qu'une partie ($f_1$) du jet auxiliaire de carburant (f) est atomisé de manière à être dispersée, tandis qu'une partie résiduelle dudit jet auxiliaire de carburant (f) circule le long de ladite surface de paroi intérieure (8) de ladite chambre de combustion (2).

4. Moteur diesel du type à injection directe selon la revendication 1, caractérisé en ce que ledit trou principal (6) desdits moyens formant injecteur de carburant (5) est exposé à ladite surface de paroi intérieure (8) de ladite chambre de combustion (2) sur le côté aval d'un tourbillon (S) formé dans ladite chambre de combustion (2), et injecte un jet principal de carburant (F) en direction de ladite surface de paroi intérieure (8) de ladite chambre de combustion (2), de manière à faire circuler ledit carburant (F) sur ladite surface de paroi intérieure (8) de ladite chambre de combustion (2) le long d'un écoulement dudit tourbillon (S).